# EUROPÄISCHE PATENTANMELDUNG

(11) **EP 4 701 026 A1**
(43) Veröffentlichungstag der Anmeldung: **25.02.2026**
(21) Anmeldenummer: 24195914.7
(22) Anmeldetag: 22.08.2024
(51) Int. Cl.: H02J 3/38, F03D 7/02

(54) **VERFAHREN ZUM STEUERN EINES WINDPARKS**

(71) Anmelder: Wobben Properties GmbH, 26607 Aurich (DE)
(72) Erfinder: Kaveh Malekian Boroujeni, 26629 Grossefehn (DE)
(74) Vertreter: Eisenführ Speiser

(57) **Zusammenfassung**

Verfahren zum Steuern eines mehrere Windenergieanlagen aufweisenden Windparks, wobei der Windpark zum Einspeisen elektrischer Leistung über einen Netzanschlusspunkt an ein eine Netzspannung mit einer Netzfrequenz aufweisendes elektrisches Versorgungsnetz angeschlossen ist, wobei der Windpark wahlweise in einem Normalbetriebsmodus oder einem von mehreren Auswahlbetriebsmodi betrieben wird, und der Normalbetriebsmodus und jeder der Auswahlbetriebsmodi jeweils einen Einspeisebetriebsmodus bilden, der festlegt, unter welchen Bedingungen der Windpark in das elektrische Versorgungsnetz einspeist, oder zum Einspeisen vorgehalten wird, und wobei ein Auswahlbetriebsmodus in Abhängigkeit von einem Auswahlsignal ausgewählt wird, wobei das Auswahlsignal eine Information enthält, welcher der Auswahlmodi auszuwählen ist, und der Windpark in dem Normalbetriebsmodus betrieben wird, wenn kein Auswahlsignal vorliegt, das zur Auswahl eines Auswahlbetriebsmodus führt.

## Beschreibung

Die vorliegende Erfindung betrifft ein Verfahren zum Steuern eines Windparks. Außerdem betrifft die vorliegende Erfindung einen Windpark.

Windparks sind bekannt, sie weisen mehrere Windenergieanlagen auf, die über einen gemeinsamen Netzanschlusspunkt in ein elektrisches Versorgungsnetz einspeisen.

Windparks arbeiten üblicherweise selbständig, sodass sie ihre Leistungseinspeisung in das elektrische Versorgungsnetz eigenständig steuern. Oftmals arbeiten sie in einem Netzparallelbetrieb, in dem der Windpark möglichst so viel Leistung in das elektrische Versorgungsnetz einspeist, wie aufgrund der jeweils vorherrschenden Windbedingungen möglich ist. Trotzdem können Windparks auch an einer Stützung des elektrischen Versorgungsnetzes beteiligt werden. Besonders können dafür Netzanschlussregeln vorgesehen sein, die dem Windpark Regeln vorgeben, wie beispielsweise, bei einer Abweichung der Netzfrequenz von einer Netznennfrequenz die eingespeiste Wirkleistung zu verändern, oder in Abhängigkeit von einer Abweichung der Netzspannung am Netzanschlusspunkt von einer Netznennspannung eine Windleistungseinspeisung zu verändern.

Solche Regelungen sind üblicherweise so ausgestaltet, dass der Windpark im Wesentlichen ungestört elektrische Leistung ins elektrische Versorgungsnetz einspeisen kann. Das ist besonders auch dadurch begründet, dass das elektrische Versorgungsnetz üblicherweise so dimensioniert ist, dass es eine hohe Stabilität aufweist, sodass netzstützende Maßnahmen eher selten oder in geringem Umfang erforderlich sind.

Treten aber Probleme im elektrischen Versorgungsnetz auf, oder soll erwarteten Problemen vorgebeugt werden, so kann es wünschenswert sein, den Windpark stärker in eine Netzstützung einzubinden. Es ist aber nicht wünschenswert, dass sich ein Windpark ständig und überwiegend mit der Netzstützung beschäftigt, da dadurch das Einspeisen der Wirkleistung mitunter verringert werden kann, sodass aus Wind einspeisbare Leistung möglicherweise verschenkt wird. Außerdem kann ein stärker in die Netzstützung eingebundener Windpark sensitiver auf Ereignisse im elektrischen Versorgungsnetz reagieren, was wiederum die Netzstabilität gefährden kann, wenn dies mit diversen weiteren Windparks, die ebenfalls sensitiv auf Netzveränderung reagieren, nicht optimal koordiniert ist.

Eine Koordination wäre idealerweise über einen Netzbetreiber oder anderer zentraler Einrichtung sinnvoll. Eine solche zentrale Koordination ist aber nicht praktikabel, weil dann zu viele Einspeiser, die zudem unterschiedliche Verhalten aufweisen können, koordiniert werden müssten.

Der vorliegenden Erfindung liegt somit die Aufgabe zugrunde, zumindest eines der oben genannten Probleme zu adressieren. Insbesondere soll eine Lösung vorgeschlagen werden, bei der Windparks möglichst gut zum Netzstützen eingesetzt werden, ohne dabei aber ihre Leistungseinspeisung, insbesondere ihre jährliche Energieeinspeisung, über Gebühr einzuschränken. Die Lösung sollte zudem eine möglichst hohe Stabilität des elektrischen Versorgungsnetzes fördern, zumindest die Stabilität des elektrischen Versorgungsnetzes möglichst nicht verschlechtern. Zumindest soll zu bisher bekannten Lösungen eine Alternative vorgeschlagen werden.

Erfindungsgemäß wird ein Verfahren nach Anspruch 1 vorgeschlagen. Das Verfahren betrifft somit das Steuern eines mehrere Windenergieanlagen aufweisenden Windparks. Der zugrundeliegende Windpark ist zum Einspeisen elektrischer Leistung über einen Netzanschlusspunkt an ein eine Netzspannung mit einer Netzfrequenz aufweisendes elektrisches Versorgungsnetz angeschlossen. Insoweit liegt ein üblicher Windpark vor.

Es wird vorgeschlagen, dass der Windpark wahlweise in einem Normalbetriebsmodus oder in einem von mehreren Auswahlbetriebsmodi betrieben wird. Ein Normalbetriebsmodus ist ein Betriebsmodus, in dem der Park im Grunde ganz normal betrieben wird, also ohne besondere Vorgaben. Der Windpark speist hierbei im Wesentlichen im Netzparallelbetrieb ein, wobei er die Netzanschlussregeln berücksichtigt. Der Normalbetriebsmodus ist somit ein Betriebsmodus, bei dem kein Auswahlsignal vorliegt, das zur Auswahl eines anderen Betriebsmodus, nämlich zur Auswahl eines Auswahlbetriebsmodus vorliegt.

Der Normalbetriebsmodus bezeichnet somit die Situation, in der der Windpark mit Default-Einstellungen, also Grundeinstellungen, was als Synonym angesehen wird, betrieben wird. Der Normalbetriebsmodus ist somit der Modus, in dem der Windpark arbeitet, solange von den Default-Einstellungen bzw. Grundeinstellungen nicht abgewichen wird. Der Windpark wird wohl in der meisten Zeit im Normalbetrieb sein, also im Normalbetriebsmodus arbeiten, solange nämlich keine Gründe vorliegen, weshalb von den Default-Einstellungen abzuweichen wäre.

Somit kann der Windpark wahlweise in dem Normalbetriebsmodus oder in einem von mehreren Auswahlbetriebsmodi betrieben werden. Der Normalbetriebsmodus und jeder der Auswahlbetriebsmodi bilden jeweils einen Einspeisebetriebsmodus, der festlegt, unter welchen Bedingungen der Windpark in das elektrische Versorgungsnetz einspeist, oder zum Einspeisen vorgehalten wird. Bedingungen, unter welchen der Windpark einspeist, sind beispielsweise Statiken für eine spannungsabhängige Blindleistungseinspeisung, Statiken für eine frequenzabhängige Wirkleistungseinspeisung oder auch konkrete Vorgaben einer Wirk- und/oder Blindleistungseinspeisung.

Eine bestimmte Leistung kann aber auch bei unterschiedlichen Rotordrehzahlen der Windenergieanlagen eingespeist werden und somit kann diese beispielhaft genannte Rotordrehzahl eine solche Bedingung sein, unter der der Windpark einspeist. Aber auch eine Kommunikation zur Steuerung des Windparks kann eine Bedingung sein.

Auch das Vorhalten von Leistung, also wenn Leistung vom Windpark eingespeist werden kann aber aus bestimmten Gründen nicht eingespeist wird, aber in Abhängigkeit von einem abrufenden Ereignis eingespeist werden kann, kann eine solche Bedingung sein. Besonders fällt hierunter eine Situation, wenn der Windpark bzw. seine Windenergieanlagen mit einer eingestellten und/oder windgeschwindigkeitsabhängigen Drehzahl betrieben werden, aber momentan gar keine Leistung in das elektrische Versorgungsnetz einspeisen, oder weniger als möglich. Dann kann eine Leistung aber sofort eingespeist bzw. erhöht werden, sobald sie abgerufen wird, indem dann - um es vereinfachend und anschaulich zu erklären - durch eine entsprechende Generatorsteuerung die Leistung abgerufen werden kann. Besonders dieses Beispiel ist eines für eine Bedingung, unter der der Windpark zum Einspeisen vorgehalten wird.

Es wird also vorgeschlagen, dass dazwischen ausgewählt werden kann, ob der Windpark in dem Normalbetriebsmodus betrieben wird, oder in einem der mehreren Auswahlbetriebsmodi und insoweit ausgewählt werden kann, unter welchen Bedingungen der Windpark in das elektrische Versorgungsnetz einspeist. Jeder einzelne Auswahlbetriebsmodus kann insoweit ein individuelles Profil aufweisen und durch Auswahl des betreffenden Auswahlbetriebsmodus wird somit das ihm zugeordnete Profil ausgewählt. Dieses Profil kann die Bedingungen, unter welchen der Windpark in das elektrische Versorgungsnetz einspeist oder zum Einspeisen vorgehalten wird, beinhalten, und als Auswahlprofil bezeichnet werden.

Es wird dabei vorgeschlagen, dass ein Auswahlbetriebsmodus jeweils in Abhängigkeit von einem Auswahlsignal ausgewählt wird. Somit kann die Auswahl und damit das Umschalten durch ein solches Auswahlsignal ausgelöst werden. Besonders kann ein solches Auswahlsignal von außen, also außerhalb des Windparks generiert werden. Besonders kann ein Netzbetreiber oder eine andere zentrale Leitstelle das Auswahlsignal senden.

Das Auswahlsignal enthält eine Information, welcher der Auswahlmodi auszuwählen ist. Der Windpark kann dafür eine zentrale Parksteuerung aufweisen, die dieses Auswahlsignal empfängt, die Information auswertet, welche der Auswahlmodi ausgewählt werden soll, und dann entsprechend die Auswahl durchführt. Insbesondere wird dann das entsprechende Profil ausgewählt und dann zum Betreiben des Windparks zugrunde gelegt.

Dabei wird der Windpark in dem Normalbetriebsmodus betrieben, wenn kein Auswahlsignal vorliegt, oder das Auswahlsignal die Information enthält, dass der Normalbetriebsmodus zu wählen bzw. beizubehalten ist. Liegt also ein Auswahlsignal vor, wird also insbesondere ein Auswahlsignal von extern empfangen, so führt es dazu, dass der Windpark dann nicht mehr in dem Normalbetriebsmodus betrieben wird, falls er vorher im Normalbetriebsmodus betrieben wurde, und außerdem erfolgt dann auch eine konkrete Auswahl eines der mehreren Auswahlbetriebsmodi.

Beispielsweise, um ein einfaches Beispiel zu machen, kann der Windpark zusätzlich zum Normalbetriebsmodus in drei Auswahlbetriebsmodi A, B oder C betrieben werden. Solange kein Auswahlsignal vorliegt, oder es anzeigt, dass die Windenergieanlage normal betrieben werden soll, wird der Windpark in dem Normalbetriebsmodus betrieben. Liegt ein Auswahlsignal vor, wurde also insbesondere eines von extern an den Windpark gesendet, so enthält dies zusätzlich dazu, dass der Normalbetriebsmodus verlassen werden soll, die Information, ob der Auswahlbetriebsmodus A, B oder C ausgewählt werden soll.

Hier wurde besonders erkannt, dass sich das Betreiben des Windparks in dem Normalbetriebsmodus bewährt hat. Dadurch kann entsprechend dem vorherrschenden Wind viel Leistung eingespeist werden und ein stabiler Betrieb kann gleichzeitig gewährleistet werden. Ein Netzbetreiber oder andere zentrale Koordinierungsstelle für mehrere Windparks und/oder mehrere Einspeiser braucht nicht einzugreifen. Im Grunde erfolgt, bezogen auf das elektrische Versorgungsnetz, in das eingespeist wird, eine dezentrale Steuerung, die sich auch bewährt hat.

Tritt nun aber ein besonderes Ereignis im elektrischen Versorgungsnetz auf, was besonders eine Netzstörung sein kann, kann es in einer solchen besonderen Situation sinnvoll sein, den Windpark mit einem anderen Profil einspeisen zu lassen. Es kommen aber auch andere besondere Situation in Betracht, die keine Netzstörung sein müssen, beispielsweise, dass ein großer Verbraucher, wie zum Beispiel eine Gießerei, zu- oder abgeschaltet wird,

Hier kann für unterschiedliche Situationen jeweils ein geeigneter Auswahlbetriebsmodus, nämlich besonders mit entsprechend zugeordnetem Profil, hinterlegt sein. Durch das Auswahlsignal kann dann einfach der geeignetste Auswahlbetriebsmodus und damit das geeignetste Profil ausgewählt werden. Eine solche Auswahl erfolgt schnell und einfach. Das Auswahlsignal ist ebenfalls einfach aufgebaut, da es nicht viel Information enthalten muss, und kann auch über eine Übertragungsleitung mit geringer Bandbreite aber dafür hoher Ausfallsicherheit übertragen werden.

Besonders wurde erkannt, dass hierdurch ein Netzbetreiber oder andere zentrale Steuereinrichtung dem Windpark, und vorzugsweise auch diversen weiteren Windparks, ein Verhalten vorgeben kann, ohne dass dafür aber ein Eingriff in die interne Steuerung des Windparks erforderlich ist. Ein solcher Eingriff, der zum einen aus Gründen der Datensicherheit und Cybersicherheit unerwünscht ist, und auch für eine zentrale Leitstelle, die nämlich einen solchen Eingriff für diverse Windparks vorsehen müsste, sehr aufwändig wäre, wird vermieden.

Es kommt aber auch in Betracht, dass das Auswahlsignal intern erzeugt wird, insbesondere von einer zentralen Parksteuerung oder einer Windenergieanlage.

Gemäß einem Aspekt wird vorgeschlagen, dass das Auswahlsignal zur Auswahl eines Auswahlmodus in Abhängigkeit von einem Netzzustand des elektrischen Versorgungsnetzes und/oder in Abhängigkeit von einem Parkzustand erzeugt wird.

Ein Netzzustand, der zum Verlassen des Normalbetriebsmodus führt, beschreibt besonders einen Netzfehler wie einen Spannungseinbruch. Aber auch starke Spanungs- oder Frequenzschwankungen oder niederfrequente Schwingungen, also Schwingungen mit einer Frequenz unter 50 % der Netznennfrequenz, können einen Netzzustand bilden und ein solcher Netzzustand kann zu einem Auswahlsignal führen, das zum Verlassen des Normalbetriebsmodus führt und zum Auswählen eines der mehreren Betriebsmodi.

Das Auswahlsignal in Abhängigkeit von einem Netzzustand zu erzeugen, kann insbesondere von einem Netzbetreiber oder einer anderen zentralen Netzsteuereinheit ausgeführt werden. Es kommt aber auch in Betracht, dass der Windpark selbst Netzzustände des elektrischen Versorgungsnetzes überwacht und von sich aus das Auswahlsignal erzeugt, das dann ein internes Auswahlsignal sein kann.

Ein Netzzustand kann auch der Zustand anderer Einspeiser, die in dasselbe elektrische Versorgungsnetz einspeisen, sein. Hier kommt besonders in Betracht, dass eine Situation von Solarparks berücksichtigt wird. Hier können besonders die Tageszeit und/oder eine Wettersituation Aufschluss über den Zustand von Solarparks geben. In diesem Fall kann somit ein Auswahlbetriebsmodus gewählt werden, der Defizite beim Einspeisen solcher Solarparks ausgleicht bzw. berücksichtigt, wenn solche benachbarten Solarparks aufgrund geringer Sonneneinstrahlung nicht nur weniger Leistung einspeisen, sondern auch weniger Kapazität zur Netzstabilisierung haben.

Das Auswahlsignal kann zusätzlich oder alternativ in Abhängigkeit von einem Parkzustand, also einem Zustand des Windparks, erzeugt werden. Hier kommt insbesondere in Betracht, dass Probleme im Windpark erkannt wurden, beispielsweise, dass eine oder mehrere Windenergieanlagen ausgefallen sind und/oder dass ein Eisansatz vorliegt.

Es kommt auch in Betracht, dass Umweltschutzbedingungen einen Parkzustand bilden oder beeinflussen. Dazu kann eine Abregung des Windparks aufgrund einer Vorschrift beispielsweise zum Schallschutz und/oder zum Fledermausschutz in Betracht kommen.

Aber auch die Windsituation im Windpark ist ein Parkzustand und kann ein Kriterium für das Erzeugen des Auswahlsignals sein. Besonders hohe Windgeschwindigkeiten, die ein Drosseln der Windenergieanlagen zu ihrem Schutz erwarten lassen, können relevant sein. Auch hohe Turbulenzen, hohe oder niedrige Temperaturen, hohe oder niedrige Luftdichten, können einen Parkzustand bilden oder beeinflussen.

Gemäß einem Aspekt wird vorgeschlagen, dass der Windpark das Auswahlsignal nach einem Auswahlkriterium automatisch erzeugt und/oder der Windpark eine Eingabeschnittstelle aufweist, über die ein Auswahlsignal zum Auswählen eines Auswahlmodus eingegeben wird, wobei insbesondere das Auswahlsignal über die Eingabeschnittstelle von einem Netzbetreiber als Betreiber des elektrischen Versorgungsnetzes eingegeben wird oder von einem Parkbetreiber.

Der Windpark kann also Auswahlkriterien ständig abprüfen und dazu können besonders Netzzustände überprüft werden. Auswahlkriterien werden unten noch weiter erläutert, sie können besonders von Netzzuständen wie Höhe der Netzspannung, Veränderung der Netzspannung, Höhe der Netzfrequenz, Veränderung der Netzfrequenz, Netzfehler und niederfrequente Schwingungen sein. Diese und/oder andere Zustände können somit abgeprüft werden, besonders von entsprechenden Erfassungseinrichtungen an der Parksteuerung und/oder an wenigstens einer Windenergieanlage im Windpark.

Diese erfassten Zustände werden dann ausgewertet und geprüft, ob ein Auswahlkriterium zum Auswählen eines Auswahlbetriebsmodus erfüllt ist. Der Windpark, insbesondere sein Windparkregler kann dann dieses Auswahlsignal erzeugen und es kann zum Auswählen des betreffenden Auswahlbetriebsmodus führen. Dazu bzw. zur Umsetzung des ausgewählten Auswahlbetriebsmodus kann das Auswahlsignal auch an die Windenergieanlagen im Park übertragen werden. Die Windenergieanlagen können sich dann entsprechend so anpassen, wie es aufgrund des ausgewählten Auswahlbetriebsmodus vorgesehen ist.

Es kommt aber auch in Betracht, dass der Windpark das Auswahlsignal von extern empfängt und dafür die Eingabeschnittstelle aufweist. Darüber kann ein Auswahlsignal eingegeben werden, das zuvor insbesondere von einem Netzbetreiber, Parkbetreiber oder anderen zentralen Stelle erzeugt und übertragen wurde. Hierdurch wird einer externen Stelle, besonders dem Netzbetreiber, ermöglicht, einen konkreten Auswahlbetriebsmodus auszuwählen. Dadurch kann diese Zentralstelle, also insbesondere der Netzbetreiber, den Windpark als Regelungseinheit bzw. Aktuator zum Steuern des elektrischen Versorgungsnetzes einsetzen, nur dadurch, dass er einen bestimmten Auswahlbetriebsmodus auswählen kann.

Das automatische Erzeugen des Auswahlsignals durch den Windpark und das Eingeben eines Auswahlsignals über eine Eingabeschnittstelle kann auch kombiniert werden. Insbesondere wird dann vorgeschlagen, dass ein über die Eingabeschnittstelle eingegebenes Auswahlsignal vor einem automatisch erzeugten Auswahlsignal Vorrang hat. Wird also durch den Windpark ein Auswahlsignal automatisch erzeugt und gleichzeitig ein, insbesondere anderes, Auswahlsignal über die Eingabeschnittstelle eingegeben, insbesondere vom Netzbetreiber, geht dieses letztere Auswahlsignal vor.

Hier liegt besonders der Gedanke zugrunde, dass es zwar bestimmte Auswahlbetriebsmodi geben kann, die sinnvollerweise bei bestimmten Netzsituationen verwendet werden, dass aber trotzdem eine zentrale Stelle, insbesondere der Netzbetreiber, einen Überblick über die Gesamtsituation des elektrischen Versorgungsnetzes hat. Insbesondere kann diese zentrale Stelle bzw. der Netzbetreiber Informationen über die zukünftige Situation des elektrischen Versorgungsnetzes haben, die möglicherweise einen anderen Auswahlbetriebsmodus sinnvoller machen. Außerdem wird dadurch, dass dem durch die Eingabeschnittstelle eingegebene Auswahlsignal Vorgang gegeben wird, eine Pattsituation vermieden, bei der nicht klar wäre, welcher Auswahlbetriebsmodus nun verwendet werden soll.

Gemäß einem Aspekt wird vorgeschlagen, dass das Verfahren dadurch gekennzeichnet ist, dass ein Auswahlsignal in Abhängigkeit von wenigstens einer erfassten nachfolgend erläuterten Auswahleigenschaft erzeugt wird.

Eine Auswahleigenschaft kann eine Kommunikationsstörung sein, die eine Störung einer Kommunikation zwischen dem Windpark und dem Netzbetreiber anzeigt. In einem solchen Fall kann besonders ein Auswahlbetriebsmodus gewählt werden, bei dem der Windpark gegenüber dem Netzbetreiber autark arbeitet. Insoweit kann diese Auswahleigenschaft dazu führen, dass ein Auswahlbetriebsmodus, der eine Kommunikation mit dem Netzbetreiber benötigt, zugunsten eines anderen Auswahlbetriebsmodus oder dem Normalbetriebsmodus beendet wird.

Eine Auswahleigenschaft kann eine Netzspannungsstörung sein, die einen Einbruch oder Ausfall der Netzspannung am Netzanschlusspunkt anzeigt. Eine solche Netzspannungsstörung kann besonders zu einem Auswahlbetriebsmodus führen, mit dem der Windpark durch eine solche Netzspannungsstörung hindurchgesteuert wird. Hier kann besonders vorgesehen sein, das Einspeisen möglichst trotz Einbruch oder Ausfall der Netzspannung fortzusetzen. Hier können insbesondere gegenüber Netzvorschriften für den Normalbetriebsmodus erlaubte Trennungen des Windparks vom elektrischen Versorgungsnetz ausgesetzt werden, so dass der Windpark weiter einspeist, obwohl Netzspannungsbereiche verlassen werden, außerhalb derer der Windpark ansonsten zum Abschalten berechtigt wäre.

Eine erfasste Auswahleigenschaft kann eine aktuelle Tageszeit sein, insbesondere kommt hier eine aktuelle Tageszeit bezogen auf Sonnenaufgang und/oder Sonnenuntergang in Betracht. Als Auswahleigenschaft wird also berücksichtigt, ob die Sonne bald aufgeht, oder untergeht. Hier liegt besonders der Gedanke zugrunde, dass dies Einfluss auf Fotovoltaikanlagen haben kann, die ebenfalls in das elektrische Versorgungsnetz einspeisen. Es kann also ein Auswahlbetriebsmodus gewählt werden, der dazu ausgerichtet ist, einen Leistungsüberschuss, oder Leistungsunterversorgung besser zu berücksichtigen.

Eine weitere Auswahleigenschaft kann eine Netzstörung sein, insbesondere also eine zur bereits genannten Netzspannungsstörung zusätzliche Netzstörung. Eine solche Netzstörung kann besonders als Folge eines Netzereignisses auftreten. Ein solches Netzereignis kann das plötzliche Abschalten eines Verbrauchers sein. Dadurch kann es zu einer kurzfristigen Leistungserhöhung und/oder Spannungserhöhung und/oder Frequenzerhöhung im elektrischen Versorgungsnetz kommen. Auch hierauf kann ein Auswahlbetriebsmodus ausgerichtet sein, der dann durch ein entsprechend erzeugtes Auswahlsignal ausgewählt wird.

Ein vorbestimmter netzkritischer Zustand kann ebenfalls eine Auswahleigenschaft sein. Ein netzkritischer Zustand ist insbesondere ein solcher, der einen Trend hin zu einer Netzstörung anzeigt, der also eine baldige Netzstörung erwarten lässt, die aber noch nicht erreicht ist, und auch nicht mehr erreicht werden muss, wenn entsprechend gegengesteuert wird. Besonders kann das Ansteigen einer Frequenz oder Spannung in Richtung auf einen jeweils eine Störung definierenden Grenzwert ein solcher netzkritischer Zustand sein. Besonders wenn die entsprechende Netzgröße eine Steigung aufweist, also einen zeitlichen Gradient, der anzeigt, dass sich der Trend hin zu dem betreffenden Grenzwert fortsetzt.

Eine Auswahleigenschaft kann ein Unterschreiten einer vorgebbaren Mindesteinspeiseleistung des Windparks oder ein Überschreiten einer vorgebbaren Maximaleinspeiseleistung des Windparks sein. Unterschreitet der Windpark die Mindesteinspeiseleistung, die beispielsweise im Bereich von 10 bis 30 % der Parknennleistung liegen kann, wird er auch nicht viel Stützleistung bereitstellen können und darauf kann sich der davon abhängig auszuwählende Betriebsmodus einstellen.

Überschreitet der Windpark mit seiner Einspeiseleistung die vorgebbare Maximaleinspeiseleistung, oder erreicht sie, so gibt es ebenfalls Aufschluss auf die Situation des Windparks und es kann dann sinnvoll sein, einen entsprechenden Auswahlbetriebsmodus auszuwählen. Besonders beim Überschreiten oder Erreichen der vorgebbaren Maximaleinspeiseleistung ist anzunehmen, dass der Windpark viel Leistung einspeist, insbesondere bei 90 bis 100 % der Parknennleistung. Die Parknennleistung kann die Maximaleinspeiseleistung sein und dann könnte hier das Erreichen dieser Maximaleinspeiseleistung, nämlich der Parknennleistung, die Auswahleigenschaft sein.

In diesem Fall arbeiten die Windenergieanlagen nicht nur mit hoher Leistung, sondern auch mit einer Rotordrehzahl in einem drehzahlkonstanten Bereich. Dadurch können sie eine schnelle Änderung der eingespeisten Wirkleistung erreichen, also eine schnelle P-Änderungsdynamik aufweisen, bei der durch entsprechendes Pitchen die Leistung schnell reduziert werden kann, ggf. ergänzt oder ausschließlich durch eine Chopper-Schaltung zum Abführen elektrischer Leistung in Wärme an entsprechenden Leistungswiderständen.

Außerdem kann die Tatsache, dass der Windpark viel Leistung einspeist, bedeuten, dass möglicherweise diverse andere Windparks ebenfalls viel Leistung einspeisen, denn auch sie werden entsprechend viel Wind zur Verfügung stehen haben. Das kann dann im Umkehrschluss bedeuten, dass klassische Großkraftwerke mit direkt gekoppelten Synchrongeneratoren weniger Leistung einspeisen und dadurch den Windparks eine höhere Aufgabe zur Stabilisierung des elektrischen Versorgungsnetzes beikommt. Daran kann das Regelverhalten des Windparks durch Auswahl eines Auswahlbetriebsmodus angepasst werden.

Eine Ausfalleigenschaft kann ein Erkennen einer Inselnetzbildung des Windparks, insbesondere durch Erkennen geöffneter Schalter am Netzanschlusspunkt sein. In diesem Fall wird besonders vorgeschlagen, den Windpark im Inselnetzbetrieb als Auswahlbetriebsmodus weiter zu betreiben. Ein Inselnetz ist in diesem Falls besonders eines, das nicht mehr mit dem elektrischen Versorgungsnetz verbunden ist, und in diesem Fall intern im Parknetz ein Gleichgewicht zwischen erzeugter und verbrauchter Leistung in diesem Inselnetz zu gewährleisten hat. Der Windpark wird dann bevorzugt in einen Selbsterhaltungsmodus gebracht, in dem er so viel Leistung erzeugt, wie er selbst zu seiner Eigenversorgung benötigt. Vorzugsweise wird weitere Leistung erzeugt, mit der weitere Verbraucher im Parknetz versorgt werden, wenn solche Verbraucher vorhanden sind.

Eine Auswahleigenschaft kann auch ein Erkennen einer Teilnetzbildung im elektrischen Versorgungsnetz sein, insbesondere durch Erkennen geöffneter Trennschalter zwischen Teilnetzen. Hierdurch können besondere Inselnetzsituationen erkannt werden, und auch dass das elektrische Versorgungsnetz selbst ein Inselnetz gebildet haben kann, an dem der Windpark angeschlossen ist. In diesem Fall kann, insbesondere abhängig davon, was für Einspeiser an ein solches Inselnetz angeschlossen sind, dem Windpark eine besonders große Stützaufgabe zukommen, worauf der dazu zu wählende Auswahlbetriebsmodus abgestimmt ist.

Eine Auswahleigenschaft kann auch ein Überschreiten eines vorgebbaren Anteilgrenzwertes eines dynamischen Umrichteranteils im elektrischen Versorgungsnetz sein, wobei der dynamische Umrichteranteil ein Verhältnis zwischen durch aller mittels Umrichter in das elektrische Versorgungnetz eingespeister Leistung zu insgesamt in das elektrische Versorgungnetz eingespeister Leistung beschreibt. Vorzugsweise wird der Anteilsgrenzwert im Bereich von 50% bis 80% vorgegeben.

Die Betrachtung des elektrischen Versorgungsnetzes beinhaltet auch, nur einen Netzabschnitt davon zu berücksichtigen, was für sämtliche Aspekte gilt. Es muss also bspw. nicht das gesamte Europäische Verbundnetz betrachtet werden. Es wurde erkannt, dass auch Netzabschnitte die beschriebenen Eigenschaften aufweisen können.

Der dynamische Umrichteranteil bezeichnet somit den Anteil durch Umrichter eingespeister Leistung. Dieser hängt von den vorhandenen, mit dem elektrischen Versorgungsnetz gekoppelten umrichtergeführten Einspeisern ab, die also mittels Umrichter ins elektrische Versorgungsnetz einspeisen, aber er hängt auch von der aktuellen Situation ab. Einspeiser, die mittels Umrichter ins elektrische Versorgungsnetz einspeisen, sind meist Windenergieanlagen und Windparks sowie PV-Anlagen. Deren Einspeiseleistung hängt vom Wind bzw. der Sonneneinstrahlung ab und kann daher stark schwanken.

Besonders bei starkem Wind und/oder viel Sonneneinstrahlung und wenig Verbrauch, wenn also konventionelle Einspeiser zudem in ihrer Einspeiseleistung reduziert sind, wird der dynamische Umrichteranteil sehr hoch sein. Dann, besonders wenn er über oder sogar deutlich über 50% liegt, kann sich das elektrische Versorgungsnetz anders verhalten. Besonders kann eine herkömmliche stabilisierende Wirkung direkt einspeisender Synchrongeneratoren schwächer sein. Dadurch können sich bspw. Leistungsveränderungen anders auf die Netzfrequenz auswirken, als dies bei geringem dynamsichen Umrichteranteil der Fall wäre, wenn also die direktgekoppelten Synchrongeneratoren dominant sind. Daher kann es sinnvoll sein, bei einem hohen dynamischen Umrichteranteil den Normalbetriebsmodus zu verlassen.

Somit wird schließlich vorgeschlagen, dass in Abhängigkeit von der wenigstens einen erfassten Auswahleigenschaft in dem Auswahlsignal festgelegt wird, welcher Auswahlmodus auszuwählen ist. Mit anderen Worten wird in Abhängigkeit von den genannten Auswahleigenschaften der entsprechende Auswahlbetriebsmodus ausgewählt und eingestellt.

Gemäß einem Aspekt wird vorgeschlagen, dass in Abhängigkeit vom Auswahlsignal ein Auswahlmodus aus einem der nachfolgend genannten Auswahlmodi ausgewählt wird.

Ein Auswahlmodus ist ein Frequenzsensitiv-Modus, in dem Leistung gemäß einem gegenüber dem Normalbetriebsmodus veränderten Frequenz-Leistungs-Zusammenhang eingespeist wird, der einen Zusammenhang zwischen Netzfrequenz und einzuspeisender Leistung bezeichnet, wobei insbesondere bei dem veränderten Frequenz-Leistungs-Zusammenhang eine stärkere Abhängigkeit zwischen Netzfrequenz und einzuspeisender Leistung besteht, als im Normalbetriebsmodus. Diese stärkere Abhängigkeit besteht insbesondere so, dass beim veränderten Frequenz-Leistungs-Zusammenhang, zumindest teilweise, eine Frequenzänderung zu einer stärkeren Leistungsänderung der einzuspeisenden Leistung führt, als im Normalbetriebsmodus.

Der Frequenzsensitiv-Modus ist somit einer, bei dem die Leistung in besonderem Maße von der Netzfrequenz abhängig eingespeist wird. Hier ist besonders vorgesehen, dass die eingespeiste Leistung auf Änderungen der Netzfrequenz stärker reagiert, die Leistung also um einen größeren Wert verändert wird, als dieselbe Frequenzänderung im Normalbetriebsmodus bewirken würde.

Außerdem oder alternativ kann im Frequenzsensitiv-Modus vorgesehen sein, den Windpark so zu betreiben, dass er eine Vorhalteleistung aufweist, insbesondere eine Vorhalteleistung die größer als eine Vorhalteleistung im Normalbetriebsmodus ist, sollte der Normalbetriebsmodus bereits eine Vorhalteleistung vorsehen. Den Windpark mit einer Vorhalteleistung zu betreiben, also eine Vorhalteleistung vorzusehen, bedeutet, dass der Windpark mit weniger Leistung betreiben wird, also weniger Leistung erzeugt, als aufgrund des vorherrschenden Windes erzeugt und eingespeist werden kann. Dadurch kann der Windpark im Falle eines Absinkens der Netzfrequenz seine eingespeiste Leistung erhöhen und somit auch im Falle eines Absinkens der Netzfrequenz einen Stützbeitrag leisten.

Hier kann auch vorgesehen sein, dass für Frequenzbereiche eine frequenzabhängige Veränderung der Leistungseinspeisung erfolgt, die im Normalbetriebsmodus nicht erfolgen würde. So kann in diesem Sinne im Frequenzsensitiv-Modus ein kleinerer oder gar kein Totbandbereich vorgesehen sein. Ein solcher Totbandbereich beschreibt einen Bereich um die Netznennfrequenz, in dem die Netzfrequenz variieren kann, ohne dass es zu einer Veränderung der eingespeisten Wirkleistung führt. Dieser Totbandbereich wird vorzugsweise im Frequenzsensitiv-Modus schmaler gewählt, so dass bei kleineren Frequenzabweichungen, also Abweichung von der Nennfrequenz, eine Reaktion der eingespeisten Wirkleistung erfolgt.

Die stärkere Abhängigkeit ist zumindest teilweise, also für einige Frequenzbereiche vorgesehen, kann aber auch immer also für alle Frequenzbereiche gelten. Besonders dann wenn auch der Frequenzsensitiv-Modus noch ein Totband aufweist, erfolgt natürlich in diesem Totband keine frequenzabhängige Leistungsänderung. In diesem Fall ist dann die stärkere Abhängigkeit zwischen Netzfrequenz und einzuspeisender Leistung so zu verstehen, dass das Totband kleiner ist und insoweit bei Frequenzabweichungen außerhalb des kleineren Totbandes des Frequenzsensitiv-Modus, aber innerhalb eines Totbandes gemäß dem Normalbetriebsmodus, eine frequenzabhängige Leistungsänderung erfolgt, was im Normalbetriebsmodus entsprechend nicht der Fall wäre.

Eine stärkere Abhängigkeit zwischen Netzfrequenz und einzuspeisender Leistung bedeutet besonders auch, dass eine höhere Steigung in einer Zusammenhangskurve zwischen Frequenzabweichung, also der Abweichung der Netzfrequenz von der Netznennfrequenz, und einzuspeisender Leistung vorliegt.

Ein zumindest abschnittsweise linearer Zusammenhang zwischen Frequenzabweichung und einzuspeisender Leistung wird auch als Statik bezeichnet und besonders ist vorgesehen, dass eine solche Statik zwischen Frequenzabweichung und einzuspeisender Leistung im Frequenzsensitiv-Modus eine dem Betrag höhere Steigung aufweist.

Ein Auswahlmodus kann ein priorisierter Frequenzsensitiv-Modus sein. In dem priorisierten Frequenzsensitiv-Modus wird Leistung wie im Frequenzsensitiv-Modus gemäß dem veränderten Frequenz-Leistungs-Zusammenhang eingespeist, wobei zusätzlich eine Wirkleistungspriorisierung vorgesehen ist. Bei der Wirkleistungspriorisierung hat zum Einhalten einer Scheinstromgrenze eine Wirkleistungseinspeisung gegenüber einer Blindleistungseinspeisung Vorrang.

Wird also eine Wirkleistungseinspeisung und gleichzeitig eine Blindleistungseinspeisung von einer Steuerung gefordert, wobei ein entsprechendes Einspeisen dieser Wirkleistung und dieser Blindleistung zu einem Scheinstrom führen würden, der über einer Scheinstromgrenze liegt, der also überhaupt über einer Stromgrenze liegt, hat die Wirkleistungseinspeisung gegenüber der Blindleistungseinspeisung Vorrang. Die eingespeiste oder zur Einspeisung vorgesehene Blindleistung wird also reduziert, um dadurch die Scheinstromgrenze einzuhalten.

Ein weiterer Auswahlmodus kann ein Spannungssensitiv-Modus sein. In dem Spannungssensitiv-Modus wird Blindleistung gemäß einem gegenüber dem Normalbetriebsmodus veränderten Spannungs-Blindleistungs-Zusammenhang eingespeist, der einen Zusammenhang zwischen Netzspannung und einzuspeisender Blindleistung bezeichnet. Hier ist insbesondere vorgesehen, dass bei dem veränderten Spannungs-Blindleistungs-Zusammenhang eine stärkere Abhängigkeit zwischen Netzspannung und einzuspeisender Blindleistung besteht, als im Normalbetriebsmodus. Dieser stärkere Zusammenhang bedeutet insbesondere, dass beim veränderten Spannungs-Blindleistungs-Zusammenhang, zumindest teilweise, eine Spannungsänderung zu einer stärkeren, also dem Betrage nach größeren, Blindleistungsänderung der einzuspeisenden Blindleistung führt, als im Vergleich zum Normalbetriebsmodus.

Der Spannungssensitiv-Modus reagiert also besonders sensitiv auf Spannungsänderungen bzw. Spannungsabweichungen von der Netznennspannung. Der Normalbetriebsmodus kann auch eine spannungsabhängige Blindleistungseinspeisung vorsehen, die aber weniger stark ausgeprägt ist. Insbesondere kann im Spannungssensitiv-Modus, verglichen mit dem Normalbetriebsmodus, ein geringeres Totband der Spannung haben, also ein Bereich um die Netznennspannung, in der die Spannung variieren kann, ohne dass es zu einer Blindleistungseinspeisung bzw. Veränderung der Blindleistungseinspeisung kommt.

Im Grunde ist keine Blindleistungseinspeisung vorgesehen, zumindest keine ergänzende, wenn die Netzspannung Netznennspannung aufweist. Kleinere Schwankungen der Netzspannung um die Netznennspannung, nämlich im Totbandbereich, führen dann ebenfalls nicht zu einer Blindleistungseinspeisung oder ergänzenden Blindleistungseinspeisung. Es ist aber grundsätzlich möglich, dass eine Blindleistungseinspeisung bereits aus anderen Gründen vorgesehen ist, beispielsweise weil durch einen Netzbetreiber ein absoluter Q-Wert vorgegeben ist. In dem Fall würde eine Netzspannung im Totbandbereich nicht zu einer Veränderung dieser Blindleistungseinspeisung führen, die anderweitig vorgegeben ist.

Ein stärkerer Zusammenhang kann auch bedeuten, dass eine Statik einer spannungsabhängigen Blindleistungseinspeisung eine dem Betrage nach höhere Steigung aufweist. Eine solche Statik kann einen Zusammenhang zwischen Netzspannungsabweichung von der Netznennspannung bzw. von dem jeweiligen Rand des Totbandes, und einzuspeisender oder zusätzlich einzuspeisender Blindleistung darstellen. Eine stärkere Abhängigkeit kann durch eine höhere Steigung, also dem Betrage nach, dieser Statik realisiert sein.

Auch hier gilt, dass diese stärkere Abhängigkeit immer vorgesehen ist, also für den gesamten Spannungsbereich vorgesehen ist, aber Ausnahmen haben kann. Das in einem Totbandbereich wird auch im Spannungssensitiv-Modus eine Spannungsänderung ohne Einfluss auf die Blindleistungseinspeisung sein. Die Blindleistungseinspeisung würde aber im Spannungssensitiv-Modus bereits bei geringeren Spannungsabweichungen Einfluss auf die Blindleistungseinspeisung haben.

Im Spannungssensitiv-Modus kann auch vorgesehen sein, dass Gradienten einer Spannungsänderung zu einer Veränderung der Blindleistungseinspeisung führen. Eine solche Berücksichtigung von Spannungsgradienten kann im Normalbetriebsmodus gegebenenfalls nicht vorhanden sein oder schwächer ausgeprägt sein, also bei gleichen Spannungsgradienten zu geringerer Veränderung der Blindleistung führen.

Im Spannungssensitiv-Modus kann außerdem oder alternativ auch vorgesehen sein, dass gegenüber dem Normalbetriebsmodus ein kleinerer oder gar kein Totbandbereich im Spannungs-Blindleistungs-Zusammenhang vorgesehen ist, der einen Bereich um die Netznennspannung bezeichnet, in dem die Netzspannung variieren kann, ohne dass es zu einer Veränderung der eingespeisten Wirkleistung führt. Dadurch wird, wie beschrieben, eine schnellere Reaktion auf eine Spannungsänderung erreicht.

Im Spannungssensitiv-Modus kann außerdem oder alternativ auch vorgesehen sein, dass eine gegenüber dem Normalbetriebsmodus veränderte FRT-Strategie vorgesehen ist, die beschreibt, unter welchen Bedingungen der Windpark sich im Falle eines Netzfehlers vom elektrischen Versorgungsnetz trennen soll. Es ist vorgesehen, dass die veränderte FRT-Strategie insbesondere gegenüber dem Normalbetriebsmodus im Falle eines Netzfehlers zu einem längeren Verbleiben des Windparks am Netzanschlusspunkt führt. Eine FRT-Strategie (Fault-Ride-Through-Strategie) ist somit eine Strategie, wie der Windpark einen Netzfehler durchsteuert, besonders in zeitlicher Hinsicht.

Ein Auswahlmodus kann ein priorisierter Spannungssensitiv-Modus sein, in dem Blindleistung wie im Spannungssensitiv-Modus gemäß dem veränderten Spannungs-Blindleistungs-Zusammenhang eingespeist wird, wobei zusätzlich eine Blindleistungspriorisierung vorgesehen ist. Die Blindleistungspriorisierung ist quasi das Gegenteil zur Wirkleistungspriorisierung.

Bei der Blindleistungspriorisierung hat zum Einhalten einer Scheinstromgrenze eine Blindleistungseinspeisung gegenüber einer Wirkleistungseinspeisung Vorrang. Müsste also entschieden werden, eine Wirkleistungseinspeisung oder eine Blindleistungseinspeisung zum Einhalten der Scheinstromgrenze zu reduzieren, so wird bei der Blindleistungspriorisierung in dem Fall die Wirkleistungseinspeisung verringert.

Auch dieses Merkmal führt dazu, dass noch spannungssensitiver die Blindleistung eingespeist werden kann. Besonders führt die Blindleistungspriorisierung dazu, dass das Erhöhen einer Blindleistungseinspeisung nicht durch eingespeiste Wirkleistung behindert wird.

Ein Auswahlmodus kann ein Inselnetzmodus sein, in dem der Windpark bei zumindest zeitweiser Trennung vom elektrischen Versorgungsnetz weiterbetrieben wird. Die zeitweise Trennung kann im Bereich von Minuten oder Stunden, oder noch länger liegen. Hier wird somit eine Situation berücksichtigt, bei der der Windpark nicht mehr ins elektrische Versorgungsnetz einspeisen kann. Er kann auch keine Leistung aus dem elektrischen Versorgungsnetz beziehen, was für die Versorgung von Hilfskomponenten in Betracht kommen kann.

Besonders ist zu beachten, dass bei Trennung vom elektrischen Versorgungsnetz die von den Windenergieanlagen des Windparks erzeugte Leistung auch im Windpark verbraucht werden muss. Im Inselnetzmodus kann besonders vorgesehen sein, dass die Leistungserzeugung auf den Bedarf zu verbrauchender Leistung im Windpark gedrosselt wird. Es kommt aber auch in Betracht, dass zumindest ein Teil der erzeugten Leistung in eine Verlustleistung umgewandelt wird, insbesondere mittels einer oder mehrerer Chopper-Schaltungen elektrische Leistung Widerständen zur Umwandlung in Wärme zugeführt wird.

Ein Auswahlmodus kann ein Netzwiederaufbaumodus sein. In dem Netzwiederaufbaumodus wird der Windpark so gesteuert, dass er einen Netzwiederaufbau steuert oder dabei mitwirkt, wobei der Windpark insbesondere nach einer Netztrennung zum Wiederverbinden mit dem elektrischen Versorgungsnetz gesteuert wird.

Bei einem solchen Netzwiederaufbau stehen andere Kriterien im Vordergrund, als bei dem Betrieb des Windparks zum Einspeisen von Leistung. Besonders ist beim Wiederverbinden Spannungshöhe, Frequenz und Phasenlage des Windparks mit dem elektrischen Versorgungsnetz zu synchronisieren. Es ist auch die vom Windpark einzuspeisende Wirkleistung an den Bedarf im elektrischen Versorgungsnetz beim Netzwiederaufbau anzupassen.

Hier steht zunächst die Stabilität des elektrischen Versorgungsnetzes im Vordergrund, so dass ein Betrieb des Windparks im Sinne eines Netzparallelbetriebs nicht in Betracht kommt. Für einen solchen Netzwiederaufbau, insbesondere auch das Wiederverbinden, kann eine Kommunikation mit einem Netzbetreiber in dem Netzwiederaufbaumodus sein, um das Wiederverbinden netzverträglich zu koordinieren. Insbesondere wird daher eine solche Kommunikation zum Netzwiederaufbau mit dem Netzbetreiber als Teil des Netzwiederaufbaumodus vorgeschlagen.

Der Windpark kann aber auch einen Netzwiederaufbau zumindest unterstützen, also dabei mitwirken, indem der Windpark auch benötigte Leistungen bereitstellen kann, die nämlich von zuzuschaltenden Verbrauchern beim Netzwiederaufbau benötigt werden.

Das gezielte Wiederzuschalten von Verbrauchern, wie Industrieanlagen oder auch von Städten, Stadtteilen oder Orten, ist ein wichtiger Teil eines Netzwiederaufbaus und hier kann der Windpark entsprechende Leistungskontingente schnell zur Verfügung stellen. Dabei ist zu beachten, dass ein Windpark bzw. Windenergieanlagen die mit am schnellsten steuerbaren Energieversorger im elektrischen Versorgungsnetz sind. Ein Windpark kann also schnell ein entsprechendes Leistungskontingent zur Verfügung stellen und das kann über eine entsprechende Kommunikationsverbindung mit einem Netzbetreiber koordiniert werden.

All solche Aufgaben können im Netzwiederaufbaumodus implementiert bzw. vorbereitet sein. Im Netzwiederaufbaumodus kann dazu beispielsweise vorgesehen sein, dass der Windpark auf entsprechende Informationen oder Befehle seitens eines Netzbetreibers wartet. Außerdem kann vorgesehen sein, dass in dem Netzwiederaufbaumodus der Windpark an den Netzbetreiber, oder andere zentral koordinierende Stelle, bereitstellbare Leistungskontingente mitteilt. Solche Informationen können auch beinhalten, in welcher Zeit der Windpark ein solches Leistungskontingent bereitstellen kann.

Ein Leistungskontingent kann auch von einem Netzbetreiber angefordert werden und der Windpark kann darauf antworten, ob und in welcher Zeit er dieses bereitstellen kann. Kann er es bereitstellen, kann das bedeuten, dass die Windenergieanlagen auf eine entsprechende Drehzahl gebracht werden. Durch entsprechendes Pitchen können die Windenergieanlagen auf einer gewünschten Drehzahl zunächst ohne oder ohne nennenswerte Leistungserzeugung betrieben werden. Beim Abrufen des Leistungskontingents kann die Leistung dann in wenigen Sekunden, oder sogar schneller, je nach Aufbau des Windparks und der Windenergieanlagen, bereitgestellt werden.

Zudem kann im Netzwiederaufbaumodus zwischen einen Schwarzstartbetrieb und einem Unterstützungsbetrieb unterschieden werden. Besonders wird vorgeschlagen, dass bei der Auswahl des Netzwiederaufbaumodus zusätzlich zwischen dem Schwarzstartbetrieb und einem Unterstützungsbetrieb ausgewählt wird. Das Auswahlsignal kann eine entsprechende Information für diese Auswahl haben. Im Schwarzstartbetrieb startet der Windpark eigenständig einen Netzabschnitt des elektrischen Versorgungsnetzes, an den er nämlich angeschlossen ist.

Im Unterstützungsbetrieb unterstützt der Windpark einen Netzwiederaufbau, der von einer anderen Einheit, insbesondere von einem Netzbetreiber, gesteuert wird. Zur Unterstützung stellt der Windpark Leistung bereit, die von der Einheit, insbesondere dem Netzbetreiber, dafür angefordert wird. Außerdem oder alternativ kann der Windpark im Unterstützungsmodus Leistung anbieten, die von der Einheit, insbesondere dem Netzbetreiber, abgerufen werden kann. Der Unterstützungsbetrieb kann dafür beinhalten, dass eine entsprechende Kommunikation zwischen der Einheit, insbesondere dem Netzbetreiber, temporär unterhalten wird.

Ein Auswahlmodus kann ein Priorisierungsmodus sein, indem eine Einspeisepriorisierung verwendet wird, die eine Blindleistungseinspeisung gegenüber einer Wirkleistungseinspeisung priorisiert, oder eine Wirkleistungseinspeisung gegenüber einer Blindleistungseinspeisung priorisiert, wobei ein solcher Priorisierungsmodus immer dann vorgesehen ist, wenn die Einspeisepriorisierung im Normalbetriebsmodus nicht vorgesehen ist.

Beim Auswählen dieses Auswahlmodus, also als Teil des Auswahlsignals, kann noch enthalten sein, ob eine Blindleistungspriorisierung oder eine Wirkleistungspriorisierung vorgesehen ist. Es können auch weitere Details enthalten sein, nämlich ob bei einer Blindleistungspriorisierung gegebenenfalls eine Wirkleistungseinspeisung bis auf null reduzieren soll, oder ob eine gewisse Mindestwirkleistungseinspeisung bleiben darf. Gleiches gilt bei einer Wirkleistungspriorisierung, bei der festgelegt werden kann, inwieweit die Blindleistung zu reduzieren ist.

Ein weiterer Auswahlmodus kann ein Sonderbetriebsmodus sein, indem wenigstens eine auswählbare und/oder vorgegebene Parkbetriebssteuerung implementiert ist, die die Einspeisung elektrischer Leistung von dem Windpark in das elektrische Versorgungsnetz steuert und weder in dem Normalbetriebsmodus noch in den übrigen Auswahlmodi vorgesehen ist.

Somit kann durch diesen Sonderbetriebsmodus wenigstens ein weiterer Betriebsmodus geschaffen werden, der bei Bedarf entsprechend ausgestaltet wird, insbesondere können gewisse gewünschte Zusammenhänge parametriert werden. Beispielsweise kommt die Berücksichtigung von Naturschutzvorgaben in Betracht. So kann der Sonderbetriebsmodus einen Fledermausmodus beinhalten, bei dem eine Drehzahlreduzierung vom Verhalten oder erwarteten Verhalten von Fledermäusen oder anderen gefährdeten Tierarten abhängen kann.

Auch ein Schallreduzierungsmodus kann hier vorgesehen sein, der Schallvorgaben berücksichtigt. Solche Schallvorgaben können durch eine entsprechende Parksteuerung zum Beispiel windrichtungsabhängig umgesetzt werden. Je nach Windrichtung können unterschiedliche Windenergieanlagen im Windpark für eine als störend empfundene Schallausbreitung relevant sein und das kann dabei berücksichtigt werden, um ein weiteres Beispiel zu nennen. Gemäß einem Aspekt wird vorgeschlagen, dass von wenigstens einem der Auswahlmodi, insbesondere von dem jeweils ausgewählten Auswahlmodus, eine Moduskonfiguration einstellbar oder auswählbar ist, wobei die Moduskonfiguration insbesondere wenigstens eine Eigenschaft aus der folgenden Liste umfasst:
- einen Verstärkungsfaktor,
- einen K-Faktor einer Statik,
- einen Grenzwert und
- eine Spezifizierung eines Totbandes.

Hier wurde besonders erkannt, dass eine gezieltere Netzstützung erreicht werden kann, wenn die Auswahlmodi nicht starr vorgegeben sind. Diese können in ihrer Konfiguration eingestellt werden, was auch dadurch erreichbar ist, dass zwischen voreingestellten Konfigurationen ausgewählt wird.

Ein Verstärkungsfaktor ist dabei besonders ein Verstärkungsfaktor einer Regelung, die bspw. eine von der Netzfrequenz abhängige Leistungsregelung oder von der Netzspannung abhängige Blindleistungsregelung sein kann. Eine von der Netzfrequenz abhängige Leistungseinspeisung oder von der Netzspannung abhängige Blindleistungseinspeisung kann dabei durch eine so genannte Statik realisiert werden, die einen linearen Zusammenhang zwischen einer Frequenzabweichung und einer einzuspeisenden Leistung bzw. eine Spannungsabweichung und einer einzuspeisenden Blindleistung wiedergibt. Die Steigung einer solchen Statik kann durch einen K-Faktor beschrieben werden. Der K-Faktor kann als ein Beispiel eines Verstärkungsfaktors angesehen werden.

Ein Grenzwert kann eine Begrenzung einer einzuspeisenden Wirk- oder Blindleistung sein. Er kann einen Mindestwert oder einen Maximalwert bilden.

Ein Totband kann einen Bereich definieren, in dem auf eine Frequenz- oder Spannungsabweichung nicht zu reagieren ist. Das Totband kann bspw. durch seine Breite gekennzeichnet sein. Es kommt auch in Betracht, dass das Totband durch eine Breite von null gekennzeichnet ist, in dem Fall also auf ein Totband verzichtet wird.

Gemäß einem Aspekt wird vorgeschlagen, dass das Auswahlsignal zur Auswahl eines Auswahlmodus zusätzlich in Abhängigkeit einer Netzrandbedingung erzeugt wird, und/oder in Abhängigkeit von der Netzrandbedingung der Auswahlmodus ausgewählt wird und/oder eine bzw. die Moduskonfiguration des Auswahlmodus ausgewählt oder eingestellt wird wobei als Netzrandbedingung ein statischer Umrichteranteil im elektrischen Versorgungsnetz berücksichtigt wird, und der statische Umrichteranteil ein Verhältnis zwischen durch alle mittels Umrichter in das elektrische Versorgungnetz maximal einspeisbarer Leistung zu insgesamt in das elektrische Versorgungnetz durch alle Einspeiser maximal eingespeister Leistung beschreibt.

Der statische Umrichteranteil ist somit, anders als der oben beschriebene dynamische Umrichteranteil, eine Systemeigenschaft und weniger ein momentaner Netzzustand. Der dynamischen Umrichteranteil hängt natürlich von dem statischen Umrichteranteil ab, und daher sind auch die zum dynamischen Umrichteranteil oben beschriebenen Effekte für den statischen Umrichteranteil relevant.

Es wurde hier aber erkannt, dass über den statischen Umrichteranteil ganz generell das elektrische Versorgungsnetz, oder ein Netzabschnitt, klassifiziert werden kann. Es ist besonders bei einem hohen statischen Umrichteranteil, der insbesondere über 50% liegt, davon auszugehen, dass umrichtergeführte Einspeiser stärker Stützaufgaben im elektrischen Versorgungsnetz übernehmen sollten und auch übernehmen. Daher ist dann auch zu erwarten, dass der Auswahlbetriebsmodus einen stärkeren Einfluss auf das elektrische Versorgungsnetz hat.

Die Betrachtung des elektrischen Versorgungsnetzes beinhaltet auch hier, nur einen Netzabschnitt davon zu berücksichtigen.

Gemäß einem Aspekt wird vorgeschlagen, dass das Auswahlsignal über eine ausfallsichere Datenleitung übertragen wird und/oder ein Ausfall einer Datenübertragung zum Übertragen des Auswahlsignals überwacht wird und insbesondere dann, wenn ein Ausfall der Datenübertragung erkannt wurde, ein Ausfallbetriebsmodus ausgewählt wird, der dem Normalbetriebsmodus oder einem anderen Auswahlbetriebsmodi entsprechen kann.

Hier wurde besonders erkannt, dass das Übertragen des Auswahlsignals wichtig ist und daher eine ausfallsichere Datenleitung verwendet werden soll. Eine ausfallsichere Datenleitung kann sich besonders dadurch kennzeichnen, dass sie als physikalische Leitung vorgesehen ist. Sollte die Datenübertragung ausfallen, weil sie z.B. nicht sicher war, weil bspw. eine nicht ausfallsichere drahtlose Übertragung verwendet wurde, kann der Ausfallbetriebsmodus als sicherer Betriebsmodus gewählt werden. Hierfür können voreingestellte Werte, besonders eine voreingestellte Konfiguration vorgesehen sein, die dann automatisch ausgewählt wird.

Gemäß einem Aspekt wird vorgeschlagen, dass das Auswahlsignal direkt an die Windenergieanlagen des Windparks übertragen wird. Das Auswahlsignal wird somit nicht bzw. nicht nur an eine Parksteuereinheit übertragen, sondern direkt an die Windenergieanlage, z.B. von einem Netzbetreiber. Es kann auch bedeuten, dass das Auswahlsignal in einer Parksteuereinheit erzeugt wird, und insbesondere ohne weitere Änderung an die Windenergieanlagen übertragen wird.

Hier wurde erkannt, dass manche Auswahlbetriebsmodi und auch der Normalbetriebsmodus unmittelbar Einstellungen der Windenergieanlage betreffen und daher von diesen direkt berücksichtigt werden sollten. Besonders das Einspeisen von Blindleistung in Abhängigkeit von der Netzspannung wird häufig unmittelbar an den Windenergieanlagen umgesetzt. Hierfür können K-Faktoren an der Windenergieanlage hinterlegt sein und durch das Übersenden des Auswahlsignals direkt an die Windenergieanlage ausgewählt werden, insbesondere verändert werden, sollte auch vor dem Übersenden des Auswahlsignals das Einspeisen von Blindleistung in Abhängigkeit von der Netzspannung mit anderen K-Faktoren durchgeführt worden sein.

Die Auswahl eines Auswahlbetriebsmodus kann auch an individuellen Windenergieanlagen die Anpassung einer individuellen Einstellung der Windenergieanlage zur Folge haben, was somit die jeweilige Windenergieanlage individuell umsetzt. Dazu kann das Deaktivieren von temporären Anlageneinschränkungen gehören, wie bspw. eine Schattenwurfregelung oder eine Leistungsdrosselung zum Schallschutz, die vom konkreten Aufstellungsort der jeweiligen Windenergieanlage abhängen.

Vorzugsweise kann eine FRT-Strategie, also Einstellungen, wie sich die Windenergieanlage im Falle eines Netzfehlers verhält, um ihn zu durchfahren, in der Windenergieanlage implementiert sein und durch das Übersenden des Auswahlsignals direkt an die Windenergieanlage ausgewählt werden.

Gemäß einem Aspekt wird vorgeschlagen, dass in Abhängigkeit von dem ausgewählten Auswahlbetriebsmodus wenigstens eine der Windenergieanlage individuell eine temporäre Anlageneinschränkung aussetzt. Es wurde erkannt, dass eine solche temporäre Anlageneinschränkung, die oben schon erklärt wurde, insbesondere eine gegenüber einer Netzstützung niedriger priorisierte Einstellung sein kann. Eine Schattenwurfregelung und auch eine Schallschutzmaßnahme hat meist eine geringere Wichtigkeit als eine Stützung des elektrischen Versorgungsnetzes, zumal eine Netzstützung oftmals nur von kurzer Dauer ist und für die Zeit das Aussetzen der Anlageneinschränkungen hinnehmbar ist.

Erfindungsgemäß wird auch ein Windpark vorgeschlagen, nämlich ein Windpark mit mehreren Windenergieanlagen, wobei der Windpark zum Einspeisen elektrischer Leistung über einen Netzanschlusspunkt an ein eine Netzspannung mit einer Netzfrequenz aufweisendes elektrisches Versorgungsnetz angeschlossen ist, wobei der Windpark dazu vorbereitet ist, dass er
- wahlweise in einem Normalbetriebsmodus oder einem von mehreren Auswahlbetriebsmodi betrieben wird, und
- der Normalbetriebsmodus und jeder der Auswahlbetriebsmodi jeweils einen Einspeisebetriebsmodus bilden, der festlegt, unter welchen Bedingungen der Windpark in das elektrische Versorgungsnetz einspeist, oder zum Einspeisen vorgehalten wird, und wobei
- ein Auswahlbetriebsmodus in Abhängigkeit von einem Auswahlsignal ausgewählt wird, wobei
- das Auswahlsignal eine Information enthält, welcher der Auswahlmodi auszuwählen ist, und
- der Windpark in dem Normalbetriebsmodus betrieben wird, wenn kein Auswahlsignal vorliegt, das zur Auswahl eines Auswahlbetriebsmodus führt.

Dass der Windpark dazu vorbereitet ist, die Verfahrensschritte auszuführen, kann dadurch realisiert sein, dass das Verfahren dafür als Steuerverfahren auf der Parksteuereinheit implementiert ist.

Gemäß einem Aspekt wird vorgeschlagen, dass der Windpark eine Parksteuereinheit aufweist und der Windpark, insbesondere die Parksteuereinheit, dazu vorbereitet ist, ein Verfahren nach einem vorstehend beschriebenen Ausführungsformen oder Aspekte auszuführen. Das Verfahren kann dafür als Steuerverfahren auf der Parksteuereinheit implementiert sein.

Optional wird vorgeschlagen, dass jede der Windenergieanlagen dazu vorbereitet sind, in Abhängigkeit von dem Auswahlbetriebssignal ihren Betrieb an den ausgewählten Auswahlbetriebsmodus anzupassen. Die Windenergieanlagen setzen dann die Eigenschaften des ausgewählten Auswahlbetriebsmodus um, insoweit sie den Betrieb bzw. Einstellungen der Windenergieanlage betreffen. Dazu kann das entsprechende Verfahren, insbesondere das Umsetzen, auf einer Anlagensteuereinheit implementiert sein insbesondere als Steuerverfahren, dass auf der Anlagensteuereinheit implementiert ist.

Die Erfindung wird nun nachfolgend unter Bezugnahme auf die begleitenden Figuren beispielhaft näher erläutert.
- Figur 1: zeigt eine Windenergieanlage in einer perspektivischen Darstellung.
- Figur 2: zeigt einen Windpark in einer schematischen Darstellung.
- Figur 3: zeigt ein Ablaufdiagramm eines vorgeschlagenen Verfahrens.
- Figur 4: zeigt schematisch zwei unterschiedlich konfigurierte Statiken.
- Figur 5: zeigt unterschiedlich konfigurierte Statiken einer spannungsabhängigen Blindleistungseinspeisung.

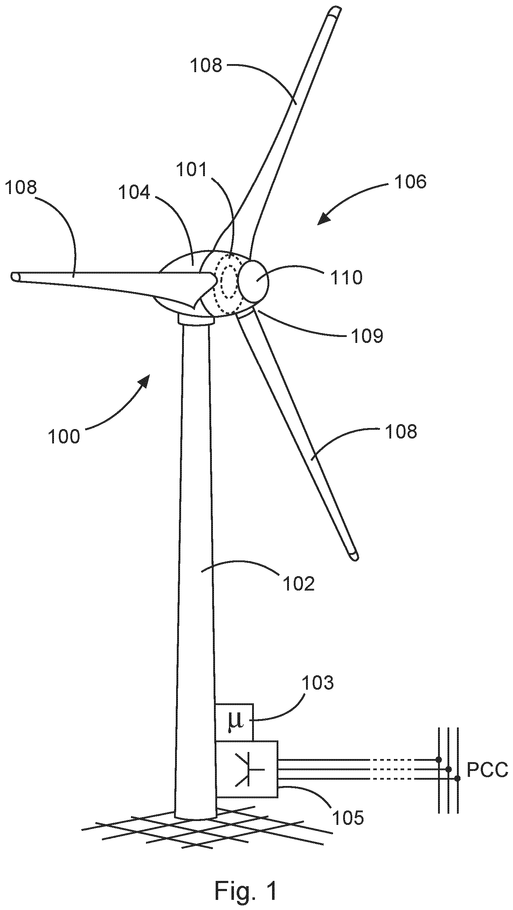

Figur 1 zeigt eine Windenergieanlage 100 mit einem Turm 102 und einer Gondel 104. An der Gondel 104 ist ein Rotor 106 mit drei Rotorblättern 108 und Rotorblattwurzeln 109 und einem Spinner 110 angeordnet. Der Rotor 106wird im Betrieb durch den Wind in eine Drehbewegung versetzt und treibt dadurch einen Generator in der Gondel 104 an.

Die Windenergieanlage 100 weist dabei einen elektrischen Generator 101 auf, der in der Gondel 104 angedeutet ist. Mittels des Generators 101 kann elektrische Leistung erzeugt werden. Die Blattwinkel der Rotorblätter 108 können durch Pitchmotoren an Rotorblattwurzeln 109 der jeweiligen Rotorblätter 108 verändert werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

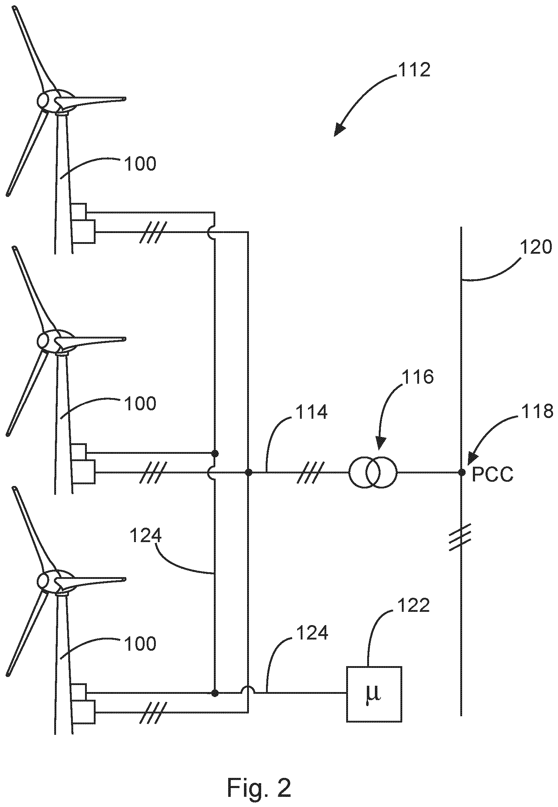

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Figur2 ist nureine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

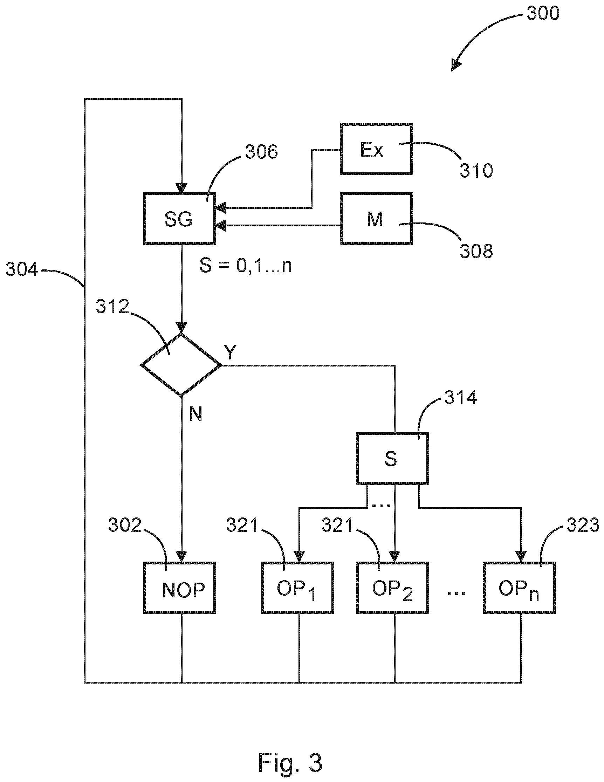

Figur 3 zeigt ein Ablaufdiagramm 300. Darin repräsentiert der Normalbetriebsmodusblock 302 einen normalen Betrieb des Windparks und damit auch der Windenergieanlagen. In diesem Normalbetriebsmodus arbeiten der Windpark und die Windenergieanlagen üblicherweise.

Nun ist eine Prüfschleife 304 symbolisiert, die den Ablauf über einen Signalerzeugungsblock 306 führt. Der Signalerzeugungsblock 306 veranschaulicht, dass ein Auswahlsignal S erzeugt werden kann. Dafür werden in dem Signalerzeugungsblock 306 diverse Signale ständig ausgewertet. Dazu können Messsignale gehören, die der Messblock 308 veranschaulicht und die dem Signalerzeugungsblock 306 übergeben werden können. Beides kann aber auf einer Parksteuereinheit des Windparks implementiert werden, wo Messsignale unmittelbar ausgewertet werden.

Weitere Informationen können von einer externen Einheit, insbesondere einem Netzbetreiber, erhalten werden. Dafür ist repräsentativ der externe Block 310 dargestellt. Er kann besonders unmittelbar eine Anforderung für den Wechsel in einen Auswahlbetriebsmodus übersenden. Eine solche Anforderung kann in dem Signalerzeugungsblock 306 in ein Auswahlsignal S umgewandelt werden. Es kommt aber auch in Betracht, dass der externe Block 310, also beispielsweise der Netzbetreiber, das Auswahlsignal S unmittelbar erzeugt und an den Signalerzeugungsblock 306 übersendet. In dem Fall wäre der Signalerzeugungsblock 306 lediglich symbolisch zum Weiterleiten eines solchen Auswahlsignals zu verstehen, er wäre dann auch entbehrlich.

Das Auswahlsignal S wird dann an den Prüfblock 312 übermittelt. Stellt sich dabei heraus, dass das Auswahlsignal S den Wert null aufweist bzw. nicht vorhanden ist, verzweigt der Prüfblock 312 nach unten zum Normalbetriebsmodusblock 302. Der Windpark wird dann unverändert im Normalbetriebsmodus weiterbetrieben.

Stellt der Prüfblock 312 aber ein Auswahlsignal S fest, das also einen anderen Wert als null aufweist, so übergibt er dieses an den Auswahlblock 314. Der Auswahlblock 314 wertet dann das Auswahlsignal S aus, und dadurch wird ein Auswahlbetriebsmodus eingeleitet. Es sind wenigstens zwei Auswahlbetriebsmodi vorgesehen, aus denen ausgewählt werden kann. Es können aber auch viel mehr Auswahlbetriebsmodi vorgesehen sein und jeweils ein Auswahlbetriebsmodusblock 321, 322 und 323 stehen insoweit repräsentativ für die unterschiedlichen, auswählbaren Auswahlbetriebsmodi.

Auch von den Auswahlbetriebsmodusblöcken 321 - 323 führt das Ablaufdiagramm zurück zum Signalerzeugungsblock 306. Es ist zu beachten, dass der Signalerzeugungsblock 306 vorzugsweise ständig prüft, ob ein Auswahlsignal S zu erzeugen ist bzw. von dem Wert null auf einen anderen Wert entsprechend einem gewünschten Auswahlbetriebsmodus zu ändern ist.

Vorzugsweise, was Figur 3 nicht zeigt, können die Konfigurationen der Auswahlbetriebsmodi, für die die drei Auswahlbetriebsmodusblöcke 321 - 323 repräsentativ stehen, angepasst werden. Dazu können Messwerte vom Messblock 308 verwendet werden, oder Informationen vom externen Block 310, oder es können gänzlich andere Informationen verwendet werden. Dazu können auch Systemzustände und/oder Systemeigenschaften des elektrischen Versorgungsnetzes gehören wie ein dynamischer und/oder statischer Umrichteranteil im elektrischen Versorgungsnetz.

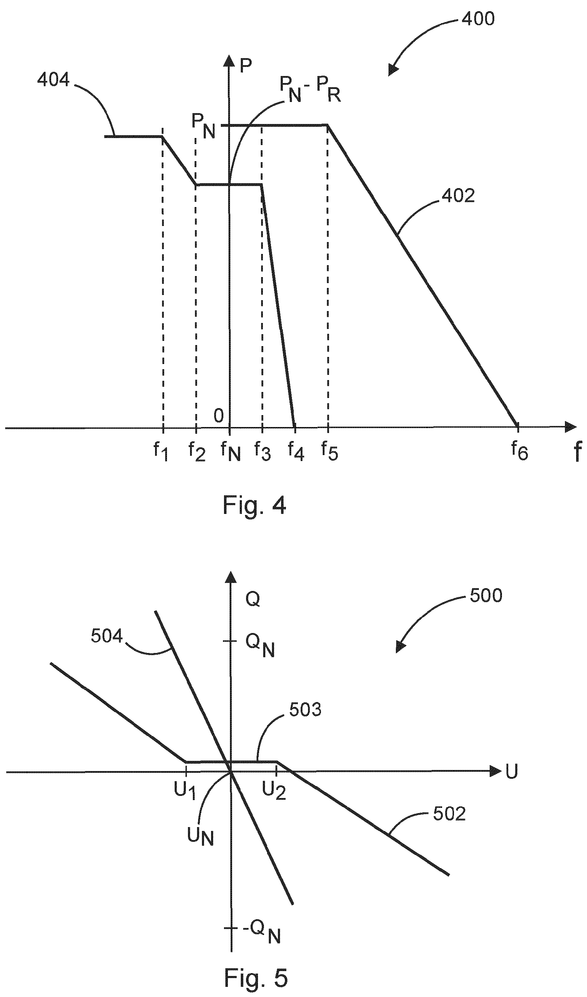

Figur 4 zeigt zwei Statiken zum Steuern einer einzuspeisenden Leistung in Abhängigkeit von der Netzfrequenz f. Dabei ist in dem Diagramm 400 eine Normalstatik 402 und eine frequenzsensitive Statik 404 dargestellt.

Die Normalstatik 402 wird also in einem Normalbetriebsmodus verwendet. Sie weist von der Netznennfrequenz f_{N} bis zur fünften Eckfrequenz f₅ einen waagerechten Bereich auf, in dem Nennleistung P_{N} eingespeist wird. Hier wird zur Vereinfachung immer angenommen, dass ausreichend Leistung im Wind vorhanden ist, also Nennleistung eingespeist werden könnte.

Somit weist die Normalstatik 402 einen Totbandbereich von der Nennfrequenz bis zum fünften Frequenzwert f₅ auf. Von da an fällt die Statik 402 linear mit konstanter Steigung zum sechsten Frequenzwert ab. Vorsorglich wird darauf hingewiesen, dass diese Normalstatik 402 lediglich ein Beispiel ist.

Die frequenzsensitive Statik ist eine Statik, die in einem frequenzsensitiven Auswahlbetriebsmodus verwendet werden kann. Diese frequenzsensitive Statik 404 unterscheidet sich von der Normalstatik 402 bereits darin, dass sie bei Nennfrequenz f_{N} keine Nennleistung einspeist. Stattdessen speist sie eine um eine Vorhalteleistung P_{R} reduzierte Leistung bei Netznennfrequenz ein, bzw. gibt das zur Umsetzung vor. Die Leistung kann also bei sinkender Frequenz noch um diese Vorhalteleistung P_{R} angehoben werden.

Auch die frequenzsensitive Statik 404 weist einen Totbandbereich auf, der aber kleiner ist und von dem zweiten Frequenzwert f₂ zum dritten Frequenzwert f₃ reicht. Fällt die Frequenz unter den zweiten Frequenzwert f₂ ab, wird die eingespeiste Leistung linear bis zum ersten Frequenzwert f₁ angehoben. Dann hat die Leistung Nennleistung P_{N} erreicht und kann nicht weiter erhöht werden.

Steigt die Frequenz, so wird gemäß der frequenzsensitiven Statik 404 die eingespeiste Leistung bereits verringert, sobald die Frequenz über den dritten Frequenzwert f₃ steigt. Sie wird dann linear reduziert bis zum vierten Frequenzwert f₄.

Hier ist zu erkennen, dass die Steigung der frequenzsensitiven Statik 404 dem Betrage nach größer ist als die der Normalstatik 402. Eine solche Steigung, die durch einen K-Faktor ausgedrückt werden kann, ist somit bei einer frequenzsensitiven Statik anders, nämlich steiler als bei der Normalstatik 402 eingestellt.

All die zur frequenzsensitiven Statik 404 erläuterten Unterschiede gegenüber der Normalstatik 402 können als Moduskonfiguration bezeichnet bzw. in einer Moduskonfiguration berücksichtigt werden. Sie bilden insoweit jeweils eine Eigenschaft der Moduskonfiguration des betreffenden Modus, hier nämlich des frequenzsensitiven Auswahlbetriebsmodus.

Figur 5 zeigt ein Diagramm 500 mit zwei unterschiedlichen Statiken für eine spannungsabhängige Blindleistungseinspeisung. Es ist eine Normalstatik 502 für den Normalbetriebsmodus für eine spannungsabhängige Blindleistungseinspeisung dargestellt. Diese weist einen Totbandbereich von U₁ - U₂ auf. Im Totbandbereich 503 ist somit keine Blindleistungseinspeisung und auch keine Änderung der Blindleistungseinspeisung bei variierender Spannung vorgesehen. Es wird darauf hingewiesen, dass nur aus zeichnerischen Gründen die Normalstatik 502 im Totbandbereich 503 einen Abstand zur Abszisse des Diagramms 500 aufweist. Tatsächlich sollte dieser Totbandbereich 503 auf der Abszisse liegen.

Außerhalb des Totbandbereichs 503 weist die Normalstatik 502 einen linearen Zusammenhang zwischen Spannungsänderung und Blindleistungsänderung auf.

Als ein Beispiel für eine spannungssensitive Statik 504 ist exemplarisch eine ohne Totbandbereich eingezeichnet. Es kann alternativ auch ein Totbandbereich vorgesehen sein, der kleiner als der Totbandbereich 503 der Normalstatik 502 ist.

Die hier gezeigte spannungssensitive Statik 504 weist zudem eine dem Betrage nach höhere Steigung und damit einen dem Betrage nach höheren K-Faktor auf. Besonders dieser K-Faktor und der Totbandbereich bzw., dass keiner vorhanden ist, kann eine Eigenschaft einer Moduskonfiguration dieses spannungssensitiven Auswahlbetriebsmodus sein, zu dem diese spannungssensitive Statik 504 gehört.

## Patentansprüche

1. Verfahren zum Steuern eines mehrere Windenergieanlagen (100) aufweisenden Windparks (112), wobei der Windpark (112) zum Einspeisen elektrischer Leistung über einen Netzanschlusspunkt an ein eine Netzspannung mit einer Netzfrequenz aufweisendes elektrisches Versorgungsnetz (120) angeschlossen ist, wobei der Windpark (112)
- wahlweise in einem Normalbetriebsmodus oder einem von mehreren Auswahlbetriebsmodi betrieben wird, und
- der Normalbetriebsmodus und jeder der Auswahlbetriebsmodi jeweils einen Einspeisebetriebsmodus bilden, der festlegt, unter welchen Bedingungen der Windpark (112) in das elektrische Versorgungsnetz (120) einspeist, oder zum Einspeisen vorgehalten wird, und wobei
- ein Auswahlbetriebsmodus in Abhängigkeit von einem Auswahlsignal ausgewählt wird, wobei
- das Auswahlsignal eine Information enthält, welcher der Auswahlmodi auszuwählen ist, und
- der Windpark (112) in dem Normalbetriebsmodus betrieben wird, wenn kein Auswahlsignal vorliegt, das zur Auswahl eines Auswahlbetriebsmodus führt.

2. Verfahren nach Anspruch 1, **dadurch gekennzeichnet, dass**
das Auswahlsignal zur Auswahl eines Auswahlmodus
- in Abhängigkeit von einem Netzzustand des elektrischen Versorgungsnetzes (120) und/oder
- in Abhängigkeit von einem Parkzustand
erzeugt wird.

3. Verfahren nach Anspruch 1 oder 2, **dadurch gekennzeichnet, dass**
- der Windpark (112) das Auswahlsignal nach einem Auswahlkriterium automatisch erzeugt und/oder
- der Windpark (112) eine Eingabeschnittstelle aufweist, über die ein Auswahlsignal zum Auswählen eines Auswahlmodus eingegeben wird, wobei insbesondere
- das Auswahlsignal über die Eingabeschnittstelle von einem Netzbetreiber als Betreiber des elektrischen Versorgungsnetzes eingegeben wird oder von einem Parkbetreiber.

4. Verfahren nach einem der vorstehenden Ansprüche, **dadurch gekennzeichnet, dass**
ein Auswahlsignal erzeugt wird in Abhängigkeit von wenigstens einer erfassten Auswahleigenschaft aus der Liste aufweisend
- eine Kommunikationsstörung, die eine Störung einer Kommunikation zwischen dem Windpark (112) und einem bzw. dem Netzbetreiber anzeigt,
- eine Netzspannungsstörung, die einen Einbruch oder Ausfall der Netzspannung am Netzanschlusspunkt anzeigt,
- eine aktuelle Tageszeit, insbesondere bezogen auf Sonnenaufgang und/oder Sonnenuntergang,
- eine Netzstörung,
- einen vorbestimmten netzkritischen Zustand, der insbesondere einen Trend hin zu einer Netzstörung anzeigt
- ein Unterschreiten einer vorgebbaren Mindesteinspeiseleistung des Windparks (112) oder ein Überschreiten oder Erreichen einer vorgebbaren Maximaleinspeiseleistung des Windparks (112),
- ein Erkennen einer Inselnetzbildung des Windparks (112), insbesondere durch Erkennen geöffneter Schalter am Netzanschlusspunkt,
- ein Erkennen einer Teilnetzbildung im elektrischen Versorgungsnetz, insbesondere durch Erkennen geöffneter Trennschalter zwischen Teilnetzen, und
- ein Überschreiten eines vorgebbaren Anteilgrenzwertes eines dynamischen Umrichteranteils im elektrischen Versorgungsnetz (120), wobei der dynamische Umrichteranteil ein Verhältnis zwischen durch aller mittels Umrichter in das elektrische Versorgungnetz (120) eingespeister Leistung zu insgesamt in das elektrische Versorgungnetz (120) eingespeister Leistung beschreibt und der Anteilsgrenzwert insbesondere im Bereich von 50% bis 80% vorgegeben wird,
und wobei in Abhängigkeit von der wenigstens einen erfassten Auswahleigenschaft in dem Auswahlsignal festgelegt wird, welcher Auswahlmodus auszuwählen ist.

5. Verfahren nach einem der vorstehenden Ansprüche, **dadurch gekennzeichnet, dass**
in Abhängigkeit vom Auswahlsignal ein Auswahlmodus ausgewählt wird aus der Liste aufweisend
- einen Frequenzsensitiv-Modus, in dem Leistung gemäß einem gegenüber dem Normalbetriebsmodus veränderten Frequenz-Leistungs-Zusammenhang eingespeist wird, der einen Zusammenhang zwischen Netzfrequenz und einzuspeisender Leistung bezeichnet, wobei insbesondere bei dem veränderten Frequenz-Leistungs-Zusammenhang eine stärkere Abhängigkeit zwischen Netzfrequenz und einzuspeisender Leistung besteht, als im Normalbetriebsmodus, insbesondere so, dass beim veränderten Frequenz-Leistungs-Zusammenhang, zumindest teilweise, eine Frequenzänderung zu einer stärkeren Leistungsänderung der einzuspeisenden Leistung führt, als im Normalbetriebsmodus, und die insbesondere eine frequenzabhängige Leistungseinspeisung steuert, die stärker von der Netzfrequenz abhängt, als im Normalbetriebsmodus, und/oder wobei gegenüber dem Normalbetriebsmodus ein kleinerer oder gar kein Totbandbereich (503) im Frequenz-Leistungs-Zusammenhang vorgesehen ist, der einen Bereich um die Netznennfrequenz bezeichnet, in dem die Netzfrequenz variieren kann, ohne dass es zu einer Veränderung der eingespeisten Wirkleistung führt,
- einen priorisierten Frequenzsensitiv-Modus, in dem Leistung wie im Frequenzsensitiv-Modus gemäß dem veränderten Frequenz-Leistungs-Zusammenhang eingespeist wird und eine Wirkleistungspriorisierung vorgesehen ist, bei der zum Einhalten einer Scheinstromgrenze eine Wirkleistungseinspeisung gegenüber einer Blindleistungseinspeisung Vorrang hat,
- einen Spannungssensitiv-Modus, in dem Blindleistung gemäß einem gegenüber dem Normalbetriebsmodus veränderten Spannungs-Blindleistungs-Zusammenhang eingespeist wird, der einen Zusammenhang zwischen Netzspannung und einzuspeisender Blindleistung bezeichnet, wobei insbesondere bei dem veränderten Spannungs-Blindleistungs-Zusammenhang eine stärkere Abhängigkeit zwischen Netzspannung und einzuspeisender Blindleistung besteht, als im Normalbetriebsmodus, insbesondere so, dass beim veränderten Spannungs-Blindleistungs-Zusammenhang, zumindest teilweise, eine Spannungsänderung zu einer stärkeren Blindleistungsänderung der einzuspeisenden Blindleistung führt, als im Normalbetriebsmodus, und/oder wobei gegenüber dem Normalbetriebsmodus ein kleinerer oder gar kein Totbandbereich (503) im Spannungs-Blindleistungs-Zusammenhang vorgesehen ist, der einen Bereich um die Netznennspannung bezeichnet, in dem die Netzspannung variieren kann, ohne dass es zu einer Veränderung der eingespeisten Wirkleistung führt, und/oder eine gegenüber dem Normalbetriebsmodus eine veränderte FRT-Strategie vorgesehen ist, die beschreibt, unter welchen Bedingungen der Windpark (112) sich im Falle eines Netzfehlers vom elektrischen Versorgungsnetz (120) trennen soll, wobei die veränderte FRT-Strategie insbesondere gegenüber dem Normalbetriebsmodus im Falle eines Netzfehlers zu einem längeren Verbleiben des Windparks (112) am Netzanschlusspunkt führt.
- einen priorisierten Spannungssensitiv-Modus, in dem Blindleistung wie im Spannungssensitiv-Modus gemäß dem veränderten Spannungs-Blindleistungs-Zusammenhang eingespeist wird und eine Blindleistungspriorisierung vorgesehen ist, bei der zum Einhalten einer Scheinstromgrenze eine Blindleistungseinspeisung gegenüber einer Wirkleistungseinspeisung Vorrang hat,
- einen Inselnetz-Modus, in dem der Windpark (112) bei zumindest zeitweiser Trennung vom elektrischen Versorgungsnetz (120) betrieben wird,
- einen Netzwiederaufbaumodus, in dem der Windpark (112) so gesteuert wird, dass der einen Netzwiederaufbau steuert oder dabei mitwirkt, wobei der Windpark (112) insbesondere nach einer Netztrennung zum Wiederverbinden mit dem elektrischen Versorgungsnetz (120) gesteuert wird,
- einen Priorisierungsmodus, in dem eine Einspeisepriorisierung verwendet wird, die eine Blindleistungseinspeisung gegenüber einer Wirkleistungseinspeisung oder eine Wirkleistungseinspeisung gegenüber einer Blindleistungseinspeisung priorisiert, wobei die Einspeisepriorisierung im Normalbetriebsmodus nicht vorgesehen ist, und
- einen Sonderbetriebs-Modus, in dem wenigstens eine auswählbare und/oder vorgegebene Parkbetriebssteuerung implementiert ist, die die Einspeisung elektrischer Leistung von dem Windpark (112) in das elektrische Versorgungsnetz (120) steuert und weder in dem Normalbetriebsmodus noch in den übrigen Auswahlmodi vorgesehen ist.

6. Verfahren nach einem der vorstehenden Ansprüche, **dadurch gekennzeichnet, dass**
- von wenigstens einem der Auswahlmodi, insbesondere von dem jeweils ausgewählten Auswahlmodus, eine Moduskonfiguration einstellbar oder auswählbar ist, wobei
- die Moduskonfiguration insbesondere wenigstens eine Eigenschaft umfasst aus der Liste aufweisend
- einen Verstärkungsfaktor,
- einen k-Faktor einer Statik (504),
- einen Grenzwert und
- eine Spezifizierung eines Totbandes.

7. Verfahren nach einem der vorstehenden Ansprüche, **dadurch gekennzeichnet, dass**
das Auswahlsignal zur Auswahl eines Auswahlmodus zusätzlich in Abhängigkeit einer Netzrandbedingung erzeugt wird, und/oder in Abhängigkeit von der Netzrandbedingung der Auswahlmodus ausgewählt wird und/oder eine Konfiguration des Auswahlmodus ausgewählt oder eingestellt wird, wobei als Netzrandbedingung
- ein statischer Umrichteranteil im elektrischen Versorgungsnetz (120) berücksichtigt wird, und der statische Umrichteranteil ein Verhältnis zwischen durch alle mittels Umrichter in das elektrische Versorgungnetz maximal einspeisbarer Leistung zu insgesamt in das elektrische Versorgungnetz durch alle Einspeiser maximal eingespeister Leistung beschreibt.

8. Verfahren nach einem der vorstehenden Ansprüche, **dadurch gekennzeichnet, dass**
- das Auswahlsignal über eine ausfallsichere Datenleitung (124) übertragen wird und/oder
- ein Ausfall einer Datenübertragung zum Übertragen des Auswahlsignals überwacht wird und
- insbesondere dann, wenn ein Ausfall der Datenübertragung erkannt wurde, ein Ausfallbetriebsmodus ausgewählt wird, der dem Normalbetriebsmodus oder einem anderen Auswahlbetriebsmodi entsprechen kann.

9. Verfahren nach einem der vorstehenden Ansprüche, **dadurch gekennzeichnet, dass**
das Auswahlsignal direkt an die Windenergieanlagen des Windparks (112) übertragen wird.

10. Verfahren nach einem der vorstehenden Ansprüche, **dadurch gekennzeichnet, dass**
- in Abhängigkeit von dem ausgewählten Auswahlbetriebsmodus wenigstens eine der Windenergieanlage (100) individuell eine temporäre Anlageneinschränkung aussetzt.

11. Windpark (112) mit mehreren Windenergieanlagen (100), wobei der Windpark (112) zum Einspeisen elektrischer Leistung über einen Netzanschlusspunkt an ein eine Netzspannung mit einer Netzfrequenz aufweisendes elektrisches Versorgungsnetz (120) angeschlossen ist, wobei der Windpark (112) dazu vorbereitet ist, dass er
- wahlweise in einem Normalbetriebsmodus oder einem von mehreren Auswahlbetriebsmodi betrieben wird, und
- der Normalbetriebsmodus und jeder der Auswahlbetriebsmodi jeweils einen Einspeisebetriebsmodus bilden, der festlegt, unter welchen Bedingungen der Windpark (112) in das elektrische Versorgungsnetz (120) einspeist, oder zum Einspeisen vorgehalten wird, und wobei
- ein Auswahlbetriebsmodus in Abhängigkeit von einem Auswahlsignal ausgewählt wird, wobei
- das Auswahlsignal eine Information enthält, welcher der Auswahlmodi auszuwählen ist, und
- der Windpark (112) in dem Normalbetriebsmodus betrieben wird, wenn kein Auswahlsignal vorliegt, das zur Auswahl eines Auswahlbetriebsmodus führt.

12. Windpark (112) nach Anspruch 11, **dadurch gekennzeichnet, dass**
- der Windpark (112) eine Parksteuereinheit aufweist und
- der Windpark (112), insbesondere die Parksteuereinheit, dazu vorbereitet ist, ein Verfahren nach einem der Ansprüche 1 bis 10 auszuführen, wobei optional
- jede der Windenergieanlagen (100) dazu vorbereitet sind, in Abhängigkeit von dem Auswahlbetriebssignal ihren Betrieb an den ausgewählten Auswahlbetriebsmodus anzupassen.
